# EUROPÄISCHE PATENTSCHRIFT

(11) **EP 1 410 322 B1**
(45) Veröffentlichungstag und Bekanntmachung des Hinweises auf die Patenterteilung: **28.09.2005**
(21) Anmeldenummer: 02760173.1
(22) Anmeldetag: 11.06.2002
(51) Int. Cl.: G06K 19/077

(54) **VERFAHREN ZUM VERBINDEN VON MIKROCHIPMODULEN MIT AUF EINEM ERSTEN TRÄGERBAND ANGEORDNETEN ANTENNEN ZUM HERSTELLEN EINES TRANSPONDERS**
METHOD FOR CONNECTING MICROCHIP MODULES TO ANTENNAS, WHICH ARE PLACED ON A FIRST SUPPORTING STRIP, IN ORDER TO PRODUCE A TRANSPONDER
PROCEDE PERMETTANT DE RELIER DES MODULES MICROCIRCUIT INTEGRE ET DES ANTENNES DISPOSEES SUR UNE PREMIERE BANDE SUPPORT POUR PRODUIRE UN TRANSPONDEUR

(30) Priorität: 26.07.2001 DE 10136359
(43) Veröffentlichungstag der Anmeldung: 21.04.2004
(73) Patentinhaber: MUEHLBAUER AG, 93426 RODING (DE)
(72) Erfinder: OVERMEYER, Ludger, Dr., 31535 Bordenau (DE); GIEGERICH, Peter, 81243 München (DE); DEPPE, Michael, 81371 München (DE)
(74) Vertreter: Grünecker, Kinkeldey, Stockmair & Schwanhäusser Anwaltssozietät
(86) Internationale Anmeldenummer: PCT/EP2002/006408
(87) Internationale Veröffentlichungsnummer: WO 2003/012734

(56) Entgegenhaltungen:
- EP-A- 0 952 543
- FR-A- 2 760 209

## Beschreibung

Die Erfindung bezieht sich auf ein Verfahren zum Verbinden von Mikrochipmodulen mit auf einem ersten Trägerband angeordneten Antennen zum Herstellen eines Transponders, bei dem die Chipmodule zunächst auf ein zweites Trägerband aufgebracht werden und beide Trägerbänder von der Rolle kontinuierlich abgewickelt und übereinander gebracht werden, wobei die Chipmodule von dem zweiten Trägerband abgelöst und auf eine vorbestimmte Stelle des ersten Trägerbandes aufgesetzt werden.

Ein solches Verfahren ist in der europäischen Patentanmeldung nach Air 54(3) EP-A-1 382 010 beschrieben. Bei dem dort beschriebenen Verfahren werden die Chipmodule um eine beheizbare Umlenkrolle geführt, die beheizbar ist, wodurch die Adhesionskräfte des die Chipmodule auf dem zweiten Trägerband haltenden Klebers neutralisiert werden. Das auf die Weise abgelöste Chipmodul wird von einem synchron mit dem ersten Trägerband umlaufenden Transportband fixiert und nach folgenden Crimp- bzw. Lötstationen zugeführt.

Aufgabe der vorliegenden Erfindung ist es, das eingangs beschriebene Verfahren weiter zu verbessern. Diese Aufgabe wird dadurch gelöst, daß das Ablösen der Chipmodule vom zweiten Trägerband dadurch erfolgt, daß das Trägerband um eine Kante umgelenkt wird. Hierbei wird der Umstand ausgenutzt, daß das zweite Trägerband, in der Regel eine Folie, sehr flexibel ist, während das Chipmodul eine gewisse Steifigkeit aufweist. Das Umlenken des Trägerbandes um eine Kante bewirkt, daß sich das Trägerband von dem Chipmodul abschält.

Dieser Abschälvorgang kann vorzugsweise dadurch begünstigt werden, daß das Trägerband im Bereich der Ablösestelle erwärmt wird und/oder dadurch, daß die Umlenkkante scharfkantig ist. Beide Maßnahmen begünstigen den Ablösevorgang.

Gemäß einer vorteilhaften Ausgestaltung der Erfindung wird das auf diese Weise abgelöste Chipmodul von einer Mitnahmeeinrichtung übernommen, die das Chipmodul auf das erste Trägerband aufsetzt und die zumindest zum Zeitpunkt des Aufsetzens das Chipmodul synchron mit dem ersten Trägerband mitbewegt. Besonders bevorzugt wird hierbei eine Mitnahmeeinrichtung, die eine über einen Kurbeltrieb angetriebene Schwinge mit einem Fixierstempel aufweist, der das abgelöste Chipmodul auf das erste Trägerband aufsetzt. Der die Schwinge antreibende Kurbeltrieb läßt sich auf einfache Weise mit dem ersten Trägerband synchronisieren, so daß zum Zeitpunkt des Aufsetzens des Chipmoduls auf die Anschlüsse der jeweiligen Antenne das Chipmodul mit gleicher Geschwindigkeit, wie das erste Trägerband bewegt wird.

Das Aufsetzen und Fixieren des Chipmoduls auf dem ersten Trägerband läßt sich einfach dadurch erreichen, daß das Chipmodul mittels des Fixierstempels auf das erste Trägerband aufgeklebt wird. Hierbei nutzt man den Umstand aus, daß die Chipmodule ohnehin mit einer Klebefolie ausgerüstet sind.

Alternativ kann das Chipmodul allerdings auch mittels des Fixierstempels auf das Trägerband aufgecrimpt werden, wobei gleichzeitig die elektrischen Anschlüsse mit der Antenne durch diesen Crimpvorgang hergestellt werden. In diesem Zusammenhang ist es günstig, wenn die Mitnahmeeinrichtung eine Doppelschwinge aufweist, mit beidseitig des ersten Trägerbandes paarweise angeordneten Fixierstempeln. Die beiden paarweise angeordneten Fixierstempel können auf diese Weise die Crimpstation bilden, wobei der eine Stempel das Werkzeug und der andere Fixierstempel das Gegenwerkzeug darstellt.

Eine andere Möglichkeit zum synchronen Antrieb der Mitnahmeeinrichtung kann vorzugsweise darin bestehen, daß die Mitnahmeeinrichtung mit dem ersten Trägerband zeitweise verbindbar ist. Dies kann beispielsweise durch eine Kupplung geschehen, die die Mitnahmeeinrichtung kraftschlüssig mit dem ersten Trägerband verbindet. Sobald der Fixiervorgang abgeschlossen ist, wird die Kupplung wieder gelöst, so daß die Mitnahmeeinrichtung, beispielsweise über eine Federeinrichtung wieder in ihre Ausgangsstellung zurückbewegt werden kann.

Im folgenden wird ein Ausführungsbeispiel der Erfindung anhand einer Zeichnung näher erläutert.

Es zeigen:
- Fig. 1: ein erstes, mit Antennen bestücktes Trägerband,
- Fig. 2: ein zweites, mit Chipmodulen bestücktes Trägerband,
- Fig. 3: das erste Trägerband aus Fig. 1 mit aufgesetzten und an die Antennenanschlüsse angeschlossenen Chipmodulen,
- Fig. 4: in einer schematischen Darstellung eine Vorrichtung zum Verbinden der Chipmodule des zweiten Trägerbandes mit den Antennen des ersten Trägerbandes und
- Fig. 5: eine Detailansicht V der Vorrichtung aus Fig. 4.

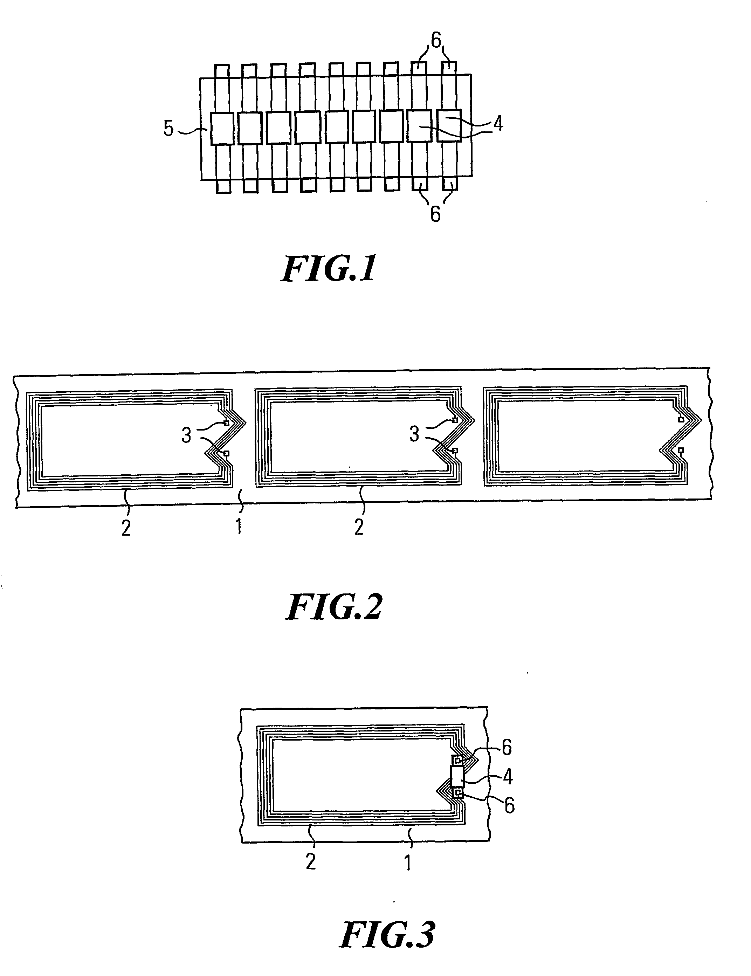

Fig. 1 zeigt ein erstes Trägerband 1, auf dem Spulen 2 als Antennen aufgebracht sind. Es handelt sich um durch galvanisches Abscheiden hergestellte Antennen. Die Spulen 2 wiesen zwei Anschlüsse 3 für ein Chipmodul auf.

Derartige Chipmodule 4 sind in Fig. 2 dargestellt. Sie sind dicht hintereinander auf einem zweiten Trägerband 5 gehalten. Die Chipmodule sind durch einen vorgeschalteten Bondprozeß in ein in Fig. 2 gezeigtes Chipgehäuse verpackt. Dieses Gehäuse weist zwei bereits verzinnte Anschlußflächen 6 auf, deren Abstand mit den Anschlüssen der Rechteckspulen 2 korrespondiert.

Fig. 3 zeigt ein Trägerband 1 mit einer Rechteckspule 2, die bereits mit einem Chipmodul 4 komplettiert wurde. Das Chipmodul 4 wurde mit seinen Anschlußflächen 6 an die Anschlüsse 3 angelötet.

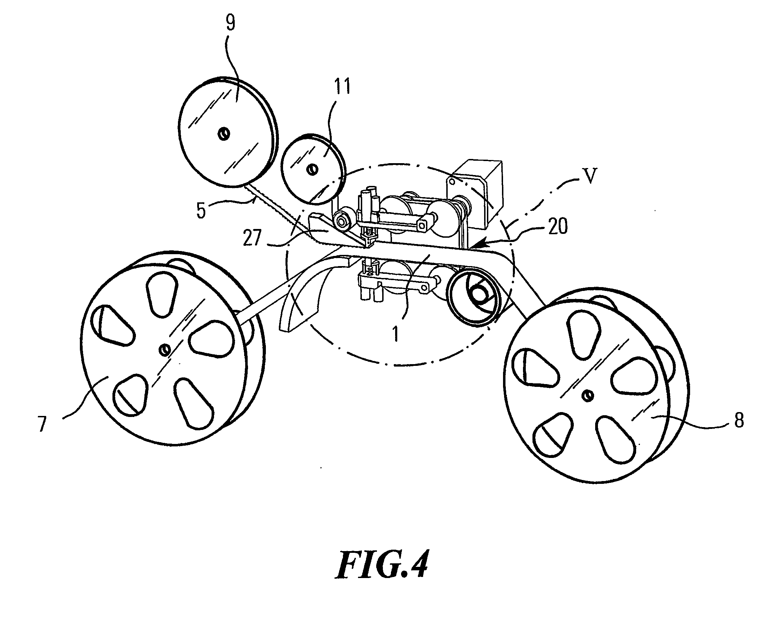

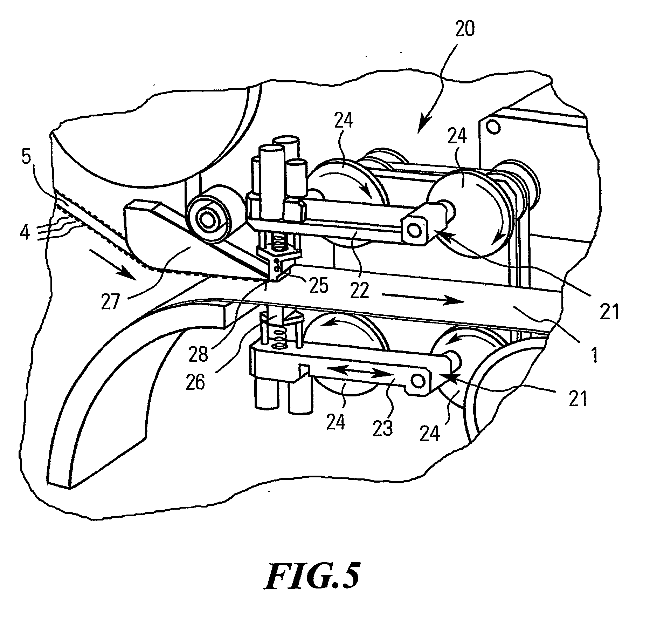

Im folgenden wird das Herstellungsverfahren anhand der Figuren 4 und 5 näher erläutert. Das erste Trägerband 1, welches die Antennenspulen 2 trägt, auf einer Antennenrohrolle 7 aufgerollt und wird von dieser abgespult und nach dem Verbindungsprozeß auf eine Antennenfertigrolle 8 wieder aufgewickelt.

Das zweite Trägerband 5, welches die Chipmodule 4 trägt, wird von einer Rolle 9 abgewickelt und auf einer zweiten Rolle 11 wieder aufgewickelt.

Zwischen der Antennenrohrolle 7 und der Antennenfertigrolle 8 ist eine Mitnahmeeinrichtung 20 vorgesehen. Diese Mitnahmeeinrichtung 20, die im Detail besser in Fig. 5 zu erkennen ist, umfaßt eine Doppelschwinge 21, mit einem oberen Schwingenarm 22 und einem unteren Schwingenarm 23. Beide Schwingenarme sind über einen Kurbelantrieb, hier bestehend aus vier Kurbeln 24, angetrieben und führen hin und her gehende Bewegungen aus, die mit der Geschwindigkeit des ersten Trägerbandes 1 synchronisiert sind. Beide Schwingenarme 22 und 23 tragen jeweils einen Fixierstempel 25 bzw. 26, wobei der obere Fixierstempel 25 als Crimpwerkzeug ausgebildet ist, während der untere Fixierstempel 26 das zugehörige Gegenwerkzeug bildet. Unmittelbar vor den Fixierstempeln ist ein Umlenkkeil für das zweite Trägerband 5 vorgesehen. Der Umlenkkeil 27 trägt eine scharfe vordere Kante 28, an der das zweite Trägerband 5 umgelenkt wird, so daß es sich von dem Chipmodul 4 ablöst.

Nachdem der Aufbau der Vorrichtung beschrieben wurde, wird nunmehr deren Funktionweise näher erläutert.

Das Antennenband 1, also das erste Trägerband, wird kontinuierlich von der Antennenrohrolle 7 abgewickelt und auf die Antennenfertigrolle 8 aufgewickelt. Der Antrieb der Rollen 9 und 11 des zweiten Trägerbandes 5 erfolgt über einen Indexer, also diskontinuierlich. Wie besonders gut aus Fig. 5 ersichtlich ist, wird das die Chipmodule 4 tragende Trägerband 5 auf der Unterseite des Umlenkkeiles 27 zugeführt und zwar so, daß das Trägerband dem Keil zugewandt ist, während die Chipmodule bereits zur Oberseite des ersten Trägerbandes 1 weisen. An der scharfen Kante 28 erfolgt die Umlenkung des Trägerbandes 5, welches sich somit von den Chipmodulen 4 ablöst. Die so abgelösten Chipmodule werden von dem Fixierstempel 25 auf das Trägerband 1 angedrückt, welches von dem auf der Unterseite angeordneten Fixierstempel 26 gestützt wird. Bei dem hier dargestellten, bevorzugten Ausführungsbeispiel wird das Fixieren durch Ankleben des Chipmodules auf dem Trägerband und durch gleichzeitiges Vercrimpen der Anschlüsse 6 der Chipmodule 4 mit den Anschlüssen 3 der Antennen 2 bewirkt. Das Verkleben wird hier auf einfache Weise dadurch erreicht, daß auf der dem Trägerband 5 abgewandten Seite der Chipmodule thermisch aktivierbare Klebefolien aufgebracht sind, die durch den beheizbaren Fixierstempel auf dem ersten Trägerband fixiert werden. Während des Klebe- und Crimpvorganges wird die Mitnahmeeinrichtung 20, genauer deren Doppelschwinge 21, über die Kurbel 24 synchron und in gleicher Geschwindigkeit mit dem Trägerband 1 mit bewegt, so daß zwischen Chipmodul 4 und Trägerband 1 keine Relativbewegung stattfindet. Nach erfolgtem Vercrimpen lösen sich die Fixierstempel 25 und 26 von dem Trägerband 1 und werden über die Schwingarme 22 und 23 wieder in ihre Ausgangsposition zurückgebracht.

Die Synchronisierung zwischen der Mitnahmeeinrichtung 20 und dem Trägerband 1 kann auf elektronischem Wege über Sensoren und nachgeschaltete elektrische Antriebe erfolgen.

Obwohl die oben beschriebene Ausführungsform bevorzugt ist, ist es auch denkbar, das Ankleben und das Vercrimpen in hintereinander geschalteten, separaten Stationen zu bewirken. Da die Chipmodule bei dem Crimpvorgang aufgrund des vorangegangenen Klebevorganges bereits fixiert sind, kann beim Crimpvorgang gegebenenfalls auf ein mitlaufendes Gegenwerkzeug verzichtet werden.

## Patentansprüche

1. Verfahren zum Verbinden von Mikrochipmodulen mit auf einem ersten Trägerband angeordneten Antennen zum Herstellen eines Transponders, bei dem die Chipmodule auf ein zweites Trägerband aufgebracht werden und beide Trägerbänder von der Rolle abgewickelt und übereinander gebracht werden, wobei die Chipmodule von dem zweiten Trägerband abgelöst und auf eine vorbestimmte Stelle des ersten Trägerbandes aufgesetzt werden, wobei das Ablösen der Chipmodule (4) vom zweiten Trägerband (5) **dadurch** erfolgt, daß das Trägerband (5) um eine Kante (28) umgelenkt wird.

2. Verfahren nach Anspruch 1, **dadurch gekennzeichnet, daß** die Umlenkkante (28) scharfkantig ist.

3. Verfahren nach Anspruch 1 oder 2, **dadurch gekennzeichnet, daß** das Ablösen der Chipmodule von dem zweiten Trägerband **dadurch** erfolgt, daß das Trägerband (5) im Bereich der Ablösestelle erwärmt wird.

4. Verfahren nach einem der Ansprüche 1 bis 3, **dadurch gekennzeichnet, daß** das abgelöste Chipmodul (4) von einer Mitnahmeeinrichtung (20) übernommen wird, die das Chipmodul (4) auf das erste Trägerband (1) aufsetzt und die zumindest im Zeitpunkt des Aufsetzens das Chipmodul (4) synchron mit dem ersten Trägerband (1) mit bewegt.

5. Verfahren nach einem der Ansprüche 1 bis 4, **dadurch gekennzeichnet, daß** die Mitnahmeeinrichtung (20) eine über einen Kurbeltrieb (Kurbeln 24) angetriebene Schwinge (21) mit einem Fixierstempel (25, 26) aufweist, in der das Chipmodul an dem ersten Trägerband (1) fixiert.

6. Verfahren nach einem der Ansprüche 1 bis 5, **dadurch gekennzeichnet, daß** das Chipmodul (4) mittels des Fixierstempels (25) auf das erste Trägerband (1) aufgeklebt wird.

7. Verfahren nach einem der Ansprüche 1 bis 6, **dadurch gekennzeichnet, daß** das Chipmodul (4) mittels des Fixierstempels (25) auf das erste Trägerband (1) aufgecrimpt wird unter gleichzeitiger Herstellung der elektrischen Verbindung mit der Antenne (2).

8. Verfahren nach einem der Ansprüche 1 bis 7, **dadurch gekennzeichnet, daß** die Mitnahmeeinrichtung (20) eine Doppelschwinge (21) aufweist, mit beidseitig des ersten Trägerbandes (1) paarweise angeordneten Fixierstempeln (25, 26).

9. Verfahren nach einem der Ansprüche 1 bis 8, **dadurch gekennzeichnet, daß** die Mitnahmeeinrichtung zum synchronen Antreiben derselben mit dem ersten Trägerband zeitweise verbindbar ist.

10. Verfahren nach einem der Ansprüche 1 bis 9, **dadurch gekennzeichnet, daß** die Mitnahmeeinrichtung durch eine Federeinrichtung wieder in ihre Ausgangsstellung zurückbewegbar ist.

11. Vorrichtung zum Durchführen des Verfahrens nach einem der Ansprüche 1 bis 10, mit einer Antennenrohrolle (7) und einer Antennenfertigrolle (8) und mit einer Rolle (9) für das die Chipmodule aufweisende zweite Trägerband (5) und einer Rolle (11) zum Aufwickeln des leeren zweiten Trägerbandes, mit einer zwischen der Antennenrohrolle (7) und der Antennenfertigrolle (8) angeordneten Mitnahmeeinrichtung (20) für das jeweils aufzusetzende Chipmodul (4) und mit einer Umlenkkante (28) für das zweite Trägerband (5) unmittelbar vor der Mitnahmeeinrichtung (20).

12. Vorrichtung nach Anspruch 11, **dadurch gekennzeichnet, daß** die Mitnahmeeinrichtung (20) einen Fixierstempel (25) zum Aufkleben und/oder Aufcrimpen des Chipmoduls auf das erste Trägerband (1) aufweist.

13. Vorrichtung nach Anspruch 11 oder 12, **dadurch gekennzeichnet, daß** die Mitnahmeeinrichtung (20) eine über einen mit dem ersten Trägerband (1) synchron angetriebenen Kurbeltrieb (Kurbeln 24) angetriebene Schwinge (21) aufweist, die den Fixierstempel (25, 26) trägt.

14. Vorrichtung nach einem der Ansprüche 11 bis 13, **dadurch gekennzeichnet, daß** der Fixierstempel (25, 26) beheizbar und als integrierter Klebe- und Crimpstempel ausgebildet ist.

15. Vorrichtung nach einem der Ansprüche 11 bis 14, **dadurch gekennzeichnet, daß** die Mitnahmeeinrichtung (20) als Doppelschwinge (21) ausgebildet ist und zwei paarweise des ersten Trägerbandes (1) gegenüberliegende Fixierstempel (25, 26) aufweist.

## Claims

1. A method of connecting micro-chip modules to antennas arranged on a first carrier tape for the manufacture of a transponder, with which the chip modules are applied to a second carrier tape and both carrier tapes are unwound from the reel and brought one over the other, the chip modules being released from the second carrier tape and placed at a predetermined point on the first carrier tape, wherein the release of the chip modules (4) from the second carrier tape (5) occurs in that the carrier tape (5) is diverted around an edge (28).

2. The method according to Claim 1, **characterised in that** the diversion edge (28) is sharp-edged.

3. The method according to Claim 1 or 2, **characterised in that** the release of the chip modules from the second carrier tape occurs **in that** the carrier tape (5) is heated in the region of the release point.

4. The method according to one of the Claims 1 to 3, **characterised in that** the released chip module (4) is taken by a holder device (20) which places the chip module (4) onto the first carrier tape (1) and which, at least at the time of placement of the chip module (4), moves synchronously with the first carrier tape (1).

5. The method according to one of the Claims 1 to 4, **characterised in that** the holder device (20) exhibits a rocker (21) driven by a crank mechanism (cranks 24) and having a fixing stamp (25, 26), in which the chip module is fixed to the first carrier tape (1).

6. The method according to one of the Claims 1 to 5, **characterised in that** the chip module (4) is stuck to the first carrier tape (1) using the fixing stamp (25).

7. The method according to one of the Claims 1 to 6, **characterised in that** the chip module (4) is crimped onto the first carrier tape (1) using the fixing stamp (25) with simultaneous joining of the electrical connection to the antenna (2).

8. The method according to one of the Claims 1 to 7, **characterised in that** the holder device (20) exhibits a double rocker (21) with fixing stamps (25, 26) arranged as a pair on both sides of the first carrier tape (1).

9. The method according to one of the Claims 1 to 8, **characterised in that** the holder device can be connected intermittently to the first carrier tape for the synchronous drive of the holder device.

10. The method according to one of the Claims 1 to 9, **characterised in that** the holder device can be returned to its initial position by a spring device.

11. A device for carrying out the method according to one of the Claims 1 to 10, with an antenna input reel (7) and an antenna finish reel (8) and with a reel (9) for the carrier tape (5) exhibiting the chip modules and a reel (11) for winding up the empty second carrier tape, with a holder device (20) arranged between the antenna input reel (7) and the antenna finish reel (8) for the chip module (4) to be placed appropriately and with a diversion edge (28) for the second carrier tape (5) directly in front of the holder device (20).

12. The device according to Claim 11, **characterised in that** the holder device (20) exhibits a fixing stamp (25) for sticking and/or crimping the chip module to the first carrier tape (1).

13. The device according to Claim 11 or 12, **characterised in that** the holder device (20) exhibits a rocker (21) driven by a crank mechanism (cranks 24) which is driven in synchronism with the first carrier tape (1), the said rocker carrying the fixing stamp (25, 26).

14. The device according to one of the Claims 11 to 13, **characterised in that** the fixing stamp (25, 26) can be heated and is formed as an integrated adhesion and crimping stamp.

15. The device according to one of the Claims 11 to 14, **characterised in that** the holder device (20) is formed as a double rocker (21) and exhibits two fixing stamps (25, 26) arranged as a pair on opposite sides of the first carrier tape (1).

## Revendications

1. Procédé de connexion de modules multi-puces avec des antennes disposées sur une première bande de support en vue de la fabrication d'un transpondeur, dans lequel les modules de puce sont appliqués sur une seconde bande de support et les deux bandes de support sont déroulées du rouleau et mises l'une sur l'autre, les modules de puce étant décollés de la seconde bande de support et posés sur un emplacement prédéfini de la première bande de support, le décollement des modules de puce (4) de la seconde bande de support (5) s'effectuant du fait que la bande de support (5) est renvoyée autour d'une arête (28).

2. Procédé selon la revendication 1, **caractérisé en ce que** l'arête de renvoi (28) est à bords vifs.

3. Procédé selon la revendication 1 ou 2, **caractérisé en ce que** le décollement des modules de puce de la seconde bande de support s'effectue du fait que la bande de support (5) est chauffée dans la zone du poste de décollement.

4. Procédé selon l'une quelconque des revendications 1 à 3, **caractérisé en ce que** le module de puce décollé (4) est pris en charge par un dispositif d'entraînement (20), qui pose le module de puce (4) sur la première bande de support (1) et qui déplace le module de puce (4) de manière synchrone avec la première bande de support (1) pour le moins au moment de la pose.

5. Procédé selon l'une quelconque des revendications 1 à 4, **caractérisé en ce que** le dispositif d'entraînement (20) présente un bielle oscillante (21) actionnée par l'intermédiaire d'une transmission à bielle (bielles 24) avec un mandrin fixateur (25, 26), qui fixe le module de puce sur le première bande de support (1).

6. Procédé selon l'une quelconque des revendications 1 à 5, **caractérisé en ce que** le module de puce (4) est collé sur la première bande de support (1) au moyen du mandrin fixateur (25).

7. Procédé selon l'une quelconque des revendications 1 à 6, **caractérisé en ce que** le module de puce (4) est serti sur la première bande de support (1) au moyen du mandrin fixateur (25) tout en établissant en même temps la connexion électrique avec l'antenne (2).

8. Procédé selon l'une quelconque des revendications 1 à 7, **caractérisé en ce que** le dispositif d'entraînement (20) présente une bielle oscillante double (21), avec des mandrins fixateurs (25, 26) disposés par paires des deux côtés de la première bande de support (1).

9. Procédé selon l'une quelconque des revendications 1 à 8, **caractérisé en ce que** le dispositif d'entraînement est assemblable temporairement avec la première bande de support en vue de l'actionnement synchrone de ce dernier.

10. Procédé selon l'une quelconque des revendications 1 à 9, **caractérisé en ce que** le dispositif d'entraînement peut être de nouveau remis dans sa position de départ grâce à un dispositif à ressort.

11. Dispositif destiné à la mise en oeuvre du procédé selon l'une quelconque des revendications 1 à 10, avec un rouleau d'antennes brut (7) et un rouleau d'antennes fini (8) et avec un rouleau (9) pour la seconde bande de support (5) présentant les modules de puce et un rouleau (11) destiné à l'enroulement de la seconde bande de support vide, avec un dispositif d'entraînement (20) disposé entre le rouleau d'antennes brut (7) et le rouleau d'antennes fini (8) pour le module de puce (4) à poser à chaque fois et avec une arête de renvoi (28) pour la seconde bande de support (5) immédiatement avant le dispositif d'entraînement (20).

12. Dispositif selon la revendication 11, **caractérisé en ce que** le dispositif d'entraînement (20) présente un mandrin fixateur (25) destiné au collage et/ou au sertissage du module de puce sur la première bande de support (1).

13. Dispositif selon la revendication 11 ou 12, **caractérisé en ce que** le dispositif d'entraînement (20) présente une bielle oscillante (21) actionnée par l'intermédiaire d'une transmission à bielle (bielles 24) actionnée de manière synchrone avec la première bande de support (1), ladite bielle oscillante portant le mandrin fixateur (25, 26).

14. Dispositif selon l'une quelconque des revendications 11 à 13, **caractérisé en ce que** le mandrin fixateur (25, 26) est chauffant et est réalisé sous forme de mandrin de collage et de sertissage intégré.

15. Dispositif selon l'une quelconque des revendications 11 à 14, **caractérisé en ce que** le dispositif d'entraînement (20) est réalisé sous forme de bielle oscillante double (21) et présente deux mandrins fixateurs (25, 26) face à face par paires des deux côtés de la première bande de support (1).
